# EUROPEAN PATENT SPECIFICATION

(11) **EP 2 738 149 B1**
(45) Date of publication and mention of the grant of the patent: **14.02.2018**
(21) Application number: 12832083.5
(22) Date of filing: 30.08.2012
(51) Int. Cl.: C04B 38/08, C04B 33/02, C04B 33/32

(54) **METHOD OF MANUFACTURING POROUS CONSTRUCTION ITEMS**
VERFAHREN ZUR HERSTELLUNG PORÖSER BAUELEMENTE
PROCÉDÉ DE FABRICATION D'ARTICLES DE CONSTRUCTION POREUX

(30) Priority: 29.07.2011 RU 2011131733
(43) Date of publication of application: 04.06.2014
(73) Proprietor: Kokaya, Eduard Grigorievich, Moskovskaya obl. 142704 (RU); Kokaya, Ilya Eduardovich, Moscow 111024 (RU); Pribil, Medeya Mikhailovna, Moscow, 119991 (RU)
(72) Inventor: Kokaya, Eduard Grigorievich, Moskovskaya obl. 142704 (RU); Kokaya, Ilya Eduardovich, Moscow 111024 (RU); Pribil, Medeya Mikhailovna, Moscow, 119991 (RU)
(74) Representative: Bucher, Ralf Christian
(86) International application number: PCT/RU2012/000716
(87) International publication number: WO 2013/039427

(56) References cited:
- EP-A2- 0 225 074
- RU-C1- 2 132 834
- RU-C1- 2 132 834
- RU-C1- 2 268 248
- RU-C1- 2 351 554
- RU-C2- 2 168 130
- US-A- 4 208 367

## Description

### Field of the invention

The present invention relates to the field of building and in particular to the manufacture of ceramic products for building, and can find application in the technology of manufacturing bricks, small-scale ceramic blocks, tiles, large-sized building blocks, heat-insulating slabs and shells for pipelines.

### Background of the invention

The prior art describes various methods of manufacturing building products from clay, including essential technological stages as follows: preparing raw material mixture by grinding a clay component, wetting the mixture, pressing blanks, drying and firing them. Similar methods were described, in particular in the RU 2379251 patent of 20.01.2010 disclosing a method comprising wetting and a thorough kneading of clay, preparing a composition with 18-23% humidity, further soft molding of raw bricks that are dried to 2-6% humidity to undergo further firing carried out at a temperature of 950-1150°C; in the RU 2046772 patent of 27.10.1995 disclosing a method of manufacturing a ceramic product, consisting in using a clay-based mixture of a determined composition to press or to mold blanks to be submitted to drying and firing in a tunnel, annular or roller kiln, the firing being carried out in a tunnel kiln for 18-40 hours at the temperature of 950-1000°C, in an annular kiln for 30-55 h at 950-1000°C, and in a roller kiln for 8-12 h at 1020-1080°C.

The described methods present drawbacks residing in rather low physical and mechanical characteristics of the products obtained and in a high power consumption of the technological process.

A method for manufacturing porous building products from bloating natural clay raw materials is disclosed in the RU 2132834 patent of 10.07.1999 that comprises molding of blanks with further two-stage heating of them: primary heating to 450 - 600°C at the rate 100 - 120 °C/min, further heating to 1100 - 1250°C at the rate 150 - 200 °C/min, hold time until bloating and then shaping in pyroplastic state by pressing or rolling, with further chilling to 500 - 700°C and further cooling at a rate of 60 - 120 °C/min.

The above disclosed method presents a disadvantage residing in its high energy consumption and in the complexity of its technological process due to the presence of two stages of shaping, the first one for making blanks and the second one for making products of a given shape.

The European patent application EP 0 225 074 A2, which is considered as being the prior art closest to the claimed invention, discloses a method of heat-treating particulate material, such as slate or clay, so as to expand the same , and produce a lightweight granular product (suitable for use, for example, as an aggregate in the production of lightweight concrete products) characterised in that it comprises supplying the material to a moving hearth at a charging zone so as to be distributed over said hearth, and moving the hearth successively through a treatment zone whereat the material is subjected to an elevated temperature, at which at least partial fusion takes place, so as to expand it, and a discharge zone, at which the resultant expanded product leaves or is removed from the hearth.

### Description of the invention

The technical result to get achieved by the present invention is to simplify the technological process of manufacturing porous building products from bloating natural clay raw materials while preserving their physical and mechanical characteristics and, as a result, to reduce the net cost of the products thanks to reduced energy consumption. Furthermore, the present method for manufacturing porous building products from bloating natural clay raw materials is ecologically secure since it is free from such side products as oxides of carbon, nitrogen and its compounds.

Said technical result is achieved by the fact that in the method for manufacturing porous building products from bloating natural clay raw materials, comprising the steps of preparing raw materials, shaping, two-stage heating with some hold time until the bloating, and a stabilization stage, the first heating stage is carried out before the shaping and is performed simultaneously with the raw material transporting to the area of loading into a mold, the shaping is carried out in the mold realized as a muffle furnace with a cover, the second heating stage is performed at a temperature of at least 1250°C for at least 10 min, and the stabilization takes place in an inclined tunnel furnace, the inside temperature at the entrance of which is at least 900°C, the final product being cooled down at a rate of no more than 120 °C/h, with the provision of cooling the products at the outlet to no more than 30 - 40°C. With this, the physical and mechanical properties of the final product can vary depending on the volume of raw materials loaded into the mold.

### Brief description of the drawings

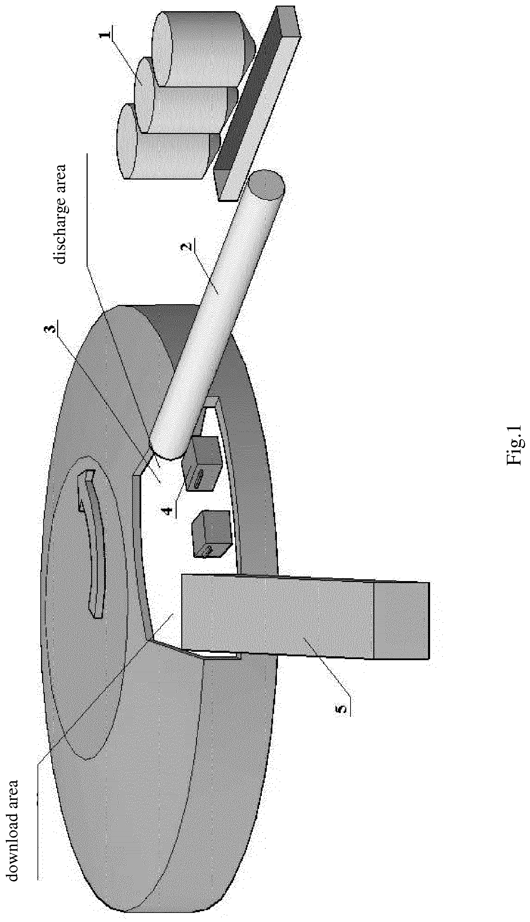

Fig. 1 represents a diagram of the technological process where:
1 is a receiving hopper with a dosing apparatus;
2 is a conveyer with electric heating;
3 is an annular platform;
4 is a mold;
5 is a tunnel furnace.

### Preferred embodiment of the invention

As raw materials for manufacturing porous building products, use can be made of clay shale, argillites, materials of river drift mud streams (Dagestan), mine tailings, stripping dumps of mine managements (Bakal, Chelyabinsk region), existing clay shale open-cut mines and dumps (Zamchalovo, Rostov region) and other clay shale open-cut mines the production waste of which exceeds their output volumes.

Experimentally, shale of fractions 0.5 - 2 mm; 5 - 10 mm; 10 - 20 mm was tested, having the composition as follows:

**Table 1**

| | SiO₂ | Al₂O₃ | Fe₃O₄ | TiO₂ | CaO | MgO | CO₃²⁻ | Na₂O | K₂O | P₂O₅ | C | ppp |
|---|---|---|---|---|---|---|---|---|---|---|---|---|
| Dagestan | 57.34 | 19.68 | 7.57 | 0.93 | 1.11 | 1.64 | 1.2 | 1.4 | 3.02 | 0.22 | 0.94 | 4.95 |
| Bakal Chelyabinsk | 59.16 | 19.94 | 8.15 | 0.7 | 1.04 | 1.82 | 0.32 | 1.82 | 2.52 | 0.24 | <0.1 | 4.29 |
| Zamchalovo (Rostov) | 57.0 | 20.97 | 7.57 | 0.96 | 0.63 | 1.48 | <0.1 | 1.16 | 3.71 | 0.19 | 0.35 | 5.98 |

The method for manufacturing porous building products from bloating natural clay raw materials comprises the following technological cycles:

### 1. Raw material preparation.

At this stage of the technological process, the raw materials are separated into fractions and, when necessary, they are ground until the necessary particle size. Depending on clay shale deposits and on their size grading, a crushing and sorting unit and a sand washer are provided. In particular, near the river estuaries of Dagestan, the size grading varies from dust-like to 100 mm and more, which enables to sort the raw materials with a sieve and a sand washer, without any additional crushing. In other cases, the crushing and sorting unit can be installed both at the open-cut mine and at a production site.

### 2. First heating stage.

At this stage of the technological process, the raw materials are loaded with grabs into the receiving hopper 1 from which they are fed by a dosing apparatus onto a horizontal conveyer that transfers the raw materials into a heat-insulated conveyer 2 with electric heating. The raw material volume fed by the dosing apparatus to the conveyer is determined depending on the density of the final product. Experimental studies carried out showed that if a 5 liter mold is loaded with no more than 2 kg of raw materials, the density of the final item will be 400 kg/m³. Increasing the volume of the loaded raw materials will increase the density of the final item, in particular, when loading no more than 3 and no more than 4 kg, the density of the final item will be, respectively, 600 and 800 kg/m³. As a heat-insulated conveyer with electric heating, a screw conveyer can be used, as an example. After passing through this conveyer, the raw materials are heated to 500 - 800°C (the temperature is chosen depending on the necessary production output).

### 3. Second heating stage and shaping.

A raw product heated to the necessary temperature is loaded portion-wise into a mold which is represented by a muffle furnace with a cover.

After loading the raw material into the permanently operating muffle furnace, it is heated to a temperature of at least 1250°C, with a hold time of at least 10 min. During this operation, cracking, bloating and shaping of the item occur with short time intervals. As described heretofore, depending on the volume of raw product loaded into the mold, items with given physical and mechanical characteristics are obtained in said mold closed with a cover. In particular, as a result of laboratory experiments carried out, specimens with the specific weight of 270, 375, 750 kg/m³ and the strength of 7.9; 10.4 and 2.4 kgf/cm², respectively, which demonstrates the possibility to obtain items of any density, including up to the specific weight of the bulk raw material.

In view of the fact that in oxidation-reduction processes carried out with heat-absorbing reactions occurring in the processes of silication, bloating and sintering of keramzite from clay shale at a temperature range of 450 - 1250°C, the reducing medium contains a necessary amount of oxygen in oxides and in water (in a bound state), there is no need to supply additional oxygen when the raw material is heated by electric power. The absence of additional oxygen supply prevents any entrainment, from the heating area, of small-sized particles that are formed as a result of cracking SiO₂ and other side products such as carbon, nitrogen oxides and compounds of the last, which enables the use of raw materials having fractions of 0.5 to 20 mm. Besides, thanks to the closed space of the mold and to the bubbling effect of the mechanism of bloating, one can create a product of any shape having a pumice-like structure throughout the whole body.

As a result of the laboratory experiments carried out, specimens of products were obtained with the characteristics as follows:

### 1. Compressive strength.

Specimen No 1 from the raw material with the fraction of 0.5 - 1 mm, the size of 100x100x100 mm, the compressive strength is 10.4 kg/cm².

Specimen No 2 from the raw material with the fraction of 10 - 20 mm, the size of 100x100x100 mm, the compressive strength is 7.9 kg/cm².

Said items can find application in low-rise construction (up to two stories) or in framework construction.

### 2. Heat conduction.

Heat conduction studies were carried out on the basis of the process of firing a specimen with the size of 100x100x100 mm in a laboratory muffle furnace of 12 1, with the use of a MASTECH MA5838 multimeter, the results of which are given in Table 2.

**Table 2**

| Material name | tₛₜₐᵣₜ, °C | External temperature of the specimen, after given time*, min | | | | | |
|---|---|---|---|---|---|---|---|
| | | 10 | 20 | 30 | 40 | 50 | 60 |
| Specimen No 1 | 20 | 21 | 22 | 23 | 24 | 25 | 26 |
| Gas silicate block | 17 | 17 | 18 | 18 | 19 | 20 | 21 |
| Expanded-clay lightweight concrete | 19 | 20 | 21 | 22 | 24 | 25 | 26 |

| | | | | | | | |
|---|---|---|---|---|---|---|---|
| *At the furnace internal temperature of 100°C and for the heating time to prescribed temperature of 30 min. | | | | | | | |

### 3. Specific weight.

Specimen No 1 : 375 kg/m³.
Specimen No 2 : 750 kg/m³.

These studies demonstrate the possibility to obtain products of any density, up to the specific weight of the bulk raw material.

### 4. Stabilization.

At this stage of the technological process, the finished product is extracted from the mold, which results in a sharp drop of its temperature on the surface (on the average, to 800°C), allowing to stabilize the external shell of the product for transferring the last to an inclined muffle furnace, the inside temperature at the entrance of which is maintained at least at 900°C to allow heating externally the product to that temperature, and further, in the course of its transfer along the tunnel furnace, the final product is slowly cooled down throughout its whole body. As a rule, the cooling down process lasts 6 to 7 hours when the temperature decreases at a rate of no more than 120 °C/h, with the provision of the product temperature at the tunnel furnace outlet of no higher than 30 - 40°C.

The present method for manufacturing porous building products from bloating natural clay raw materials is characterized by the following advantages:
- low prime cost thanks to the exclusion of ventilation and aspiration equipments that are not necessary any more;
- no need to carry out a thorough preparation of raw materials as to particle size grading;
- very low energy losses into environment since it enables to use at maximum the initial energy of raw material heating for obtaining finished products.

Furthermore, this method for manufacturing porous building products from bloating natural clay raw materials enables to rapidly modify the characteristics of the products to manufacture, such as specific weight that can vary between 200 and 900 kg/m³.

## Claims

1. A method for manufacturing porous building products from bloating natural clay raw materials, comprising the steps of
preparing raw materials,
shaping,
two-stage heating with some hold time until the bloating, and
a stabilization stage,
wherein the first heating stage is carried out before the shaping and is performed simultaneously with the raw material transporting to the area of loading into a mold,
the shaping is carried out in the mold realized as a muffle furnace with a cover,
the second heating stage is performed at a temperature of at least 1250°C for at least 10 min, and
the stabilization takes place in an inclined tunnel furnace, the inside temperature at the entrance of which is at least 900°C,
the final product being cooled down at a rate of no more than 120 °C/h, with the provision of cooling down the products at the outlet to no more than 30 - 40°C.

## Patentansprüche

1. Verfahren zur Herstellung von porösen Bauprodukten aus dem Aufquellen von natürlichen Tonrohstoffen, aufweisend die Schritte
Vorbereiten von Rohstoffen,
Formgeben,
zweistufiges Beheizen mit etwas Haltezeit bis zum Aufquellen, und
eine Stabilisierungsphase,
wobei die erste Heizphase vor dem Formgeben ausgeführt und gleichzeitig mit dem Transportieren von Rohstoff in den Bereich der Beschickung in eine Form durchgeführt wird,
das Formgeben in der Form, die als Muffelofen mit einem Deckel ausgeführt ist, erfolgt,
die zweite Heizphase mindestens 10 min lang bei einer Temperatur von mindestens 1250°C durchgeführt wird, und
die Stabilisierung in einem geneigten Tunnelofen stattfindet, an dessen Eingang die Innentemperatur mindestens 900°C beträgt,
wobei das Endprodukt mit einer Rate von nicht mehr als 120°C/h abgekühlt wird, mit der Festlegung des Abkühlens der Produkte am Ausgang auf nicht mehr als 30 - 40°C.

## Revendications

1. Procédé de fabrication de matériaux de construction poreux à partir de matières premières d'argile naturelle gonflante, comprenant les étapes suivantes
la préparation des matières premières,
façonnage,
un chauffage en deux étapes avec un certain temps d'attente jusqu'au gonflement, et une étape de stabilisation,
dans laquelle la première étape de chauffage est réalisée avant le façonnage et est exécutée simultanément avec le transport de la matière première jusqu' à la zone de chargement dans un moule,
le façonnage s'effectue dans le moule réalisé comme un four à moufle avec couvercle,
la deuxième étape de chauffage est effectuée à une température d'au moins 1250°C pendant au moins 10 minutes, et
la stabilisation s'effectue dans un four tunnel incliné, dont la température intérieure à l'entrée est d'au moins 900°C,
le produit final étant refroidi à une vitesse ne dépassant pas 120 °C/h, avec la possibilité de refroidir les produits à la sortie jusqu' à un maximum de 30 - 40°C.
